# EUROPEAN PATENT APPLICATION

(11) **EP 4 047 139 A1**
(43) Date of publication of application: **24.08.2022**
(21) Application number: 20893346.5
(22) Date of filing: 14.10.2020
(51) Int. Cl.: E02F 3/43, E02F 9/20, E02F 9/26, G01F 17/00, G01B 11/24, G01B 11/245

(54) **MEASUREMENT DEVICE, OPERATION SUPPORT SYSTEM, AND CONSTRUCTION MACHINERY**

(30) Priority: 26.11.2019 JP 2019213341
(71) Applicant: KOBELCO CONSTRUCTION MACHINERY CO., LTD., Hiroshima-shi Hiroshima 731-5161 (JP); Hiroshima University, Higashi-Hiroshima-shi Hiroshima 739-8511 (JP)
(72) Inventor: HOSO, Yukihiro, Hiroshima-shi, Hiroshima 731-5161 (JP); FUNAHARA, Yusuke, Hiroshima-shi, Hiroshima 731-5161 (JP); FUJIWARA, Sho, Hiroshima-shi, Hiroshima 731-5161 (JP); TAMAKI, Toru, Higashi-Hiroshima-shi, Hiroshima 739-8511 (JP)
(74) Representative: TBK
(86) International application number: PCT/JP2020/038824
(87) International publication number: WO 2021/106411

(57) **Abstract**

A measurement device is configured to: calculate first contour data of a container in an empty state at a first time; calculate second contour data indicating a surface contour of an object at a second time in execution of a scooping operation by the container; rotate the second contour data, based on differential information indicating a difference between second posture data of a working gear 4 at the second time and first posture data of the working gear 4 at the first time; specify a region defined by supplemental contour data for supplementing the surface contour of the object contained in the container in the execution of the scooping operation, the rotated second contour data, and the first contour data; and calculate, based on the specified region, a first volume indicating a volume of the object contained in the container.

## Description

### Technical Field

The present invention relates to a technology of measuring a volume of an object contained in a container rotatably attached to an arm member.

### Background Art

A hydraulic excavator is configured to calculate a volume of an object excavated by a bucket to grasp a work quantity on a work day. When the hydraulic excavator performs a work of loading the excavated object to a dump truck, a volume of the excavated object is calculated so as not to exceed a maximum loading capacity of the dump truck. Therefore, the volume of the excavated object is preferably calculated with high accuracy suitably for various aims. The following Patent Literatures 1 and 2 have been known as technologies of each calculating a volume of an excavated object.

Patent Literature 1 discloses a technology of obtaining a length from a bottom of a bucket to a surface of an excavated object by adding a length from an opening plane of the bucket in a state of containing the excavated object to the surface of the excavated object and a length from the bottom of the bucket to the opening plane of the bucket in an empty state, and calculating, based on the obtained length, a volume of the excavated object.

Patent Literature 2 discloses a technology of calculating, based on an output of a distance measurement device, a contour of soil and sand on the ground being excavated by a bucket, calculating a distal end position of the bucket, and calculating, based on the contour of the soil and sand on the ground and the distal end position, an estimative volume of estimative load soil and sand of a mount of soil and sand protruding out of the bucket from the inside thereof.

The technology of Patent Literature 1 merely includes obtaining, based on the length from the bottom of the bucket to the surface of the excavated object, the volume of the excavated object in the excavation operation in which a part of the bucket is under the ground. Therefore, the technology of Patent Literature 1 fails to accurately calculate the volume of the excavated object contained in the bucket in the excavation operation.

The estimative volume calculated by Patent Literature 2 represents a volume of the estimative load soil and sand. The volume of the estimative load soil and sand includes a volume of the soil and sand spilling out of the bucket at completion of the excavation operation. Therefore, the technology of Patent Literature 2 fails to accurately calculate the volume of the excavated object actually contained in the bucket in the excavation operation. The technology of Patent Literature 2 inherently aims at estimating a load which is applied to the excavator, and issuing, based on a result of the estimation, a warning or perform a control of reducing the load. The load of the excavator in execution of the excavation operation involves a volume of the soil and sand around the excavated object as well as the volume of the excavated object contained in the bucket. Therefore, the estimative volume calculated in Patent Literature 2 includes the volume of the soil and sand spilling out of the bucket.

It is seen from Patent Literatures 1 and 2 that calculation of a volume of an object contained in a bucket in an excavation operation has not been conventionally performed, and thus is a new aim to be achieved.

Moreover, such aim is targeted in the technical filed of a robot which performs an operation of scooping granular matters in addition to the technical filed of the construction machine.

### Citation List

### Patent Literature

Patent Literature 1: International Patent Publication No. 2016/092684
Patent Literature 2: Japanese Unexamined Patent Publication No. 2017-172316

### Summary of Invention

An object of the present invention is to provide a technology of accurately calculating a volume of an object contained in a container in execution of a scooping operation by the container.

A measurement device according to one aspect of the present invention is a measurement device for a working gear including: an arm member tiltably attached to a main body and having one more joints for allowing a posture of the arm member to be changed; and a container roratably attached to the arm member and having an opening for permitting an object to enter and leave the container, the measurement device being configured to measure a volume of the object contained in the container. The measurement device includes: a distance detector which is attached to the arm member or the main body and provides measurement data indicating a distance to a subject; a posture detector which provides posture data indicating a posture of the working gear; a first contour calculation part which calculates, based on first measurement data which is the measurement data of the container in an empty state provided by the distance detector, first contour data indicating a contour of the container; a memory which stores first posture data which is the posture data at a first time when the first measurement data is provided and the first contour data in association with each other; a second contour calculation part which calculates, based on second measurement data which is the measurement data of the object contained in the container as provided by the distance detector, second contour data indicating a surface contour of the object at a second time in execution of a scooping operation by the container after the first time; a differential information calculation part which calculates differential information indicating a difference between the first posture data and the second posture data which is the posture data provided by the posture detector at the second time; a rotation processing part which rotates, based on the differential information, the second contour data in a three-dimensional coordinate space of the distance detector so that the posture of the working gear from the distance detector to the container at the second time agrees with the posture of the working gear from the distance detector to the container at the first time; and a volume calculation part which specifies a region defined by supplemental contour data for supplementing the surface contour of the object contained in the container in the execution of the scooping operation, the rotated second contour data, and the first contour data, and calculates, based on the specified region, a first volume indicating the volume of the object contained in the container at the second time.

### Brief Description of Drawings

Fig. 1 shows an example of an exterior appearance-based configuration of a hydraulic excavator.
Fig. 2 is a block diagram showing an example of a configuration of the hydraulic excavator.
Fig. 3 is a block diagram showing an example of the configuration of the hydraulic excavator with a focus on a second controller.
Fig. 4 is a flowchart showing an exemplary process by the hydraulic excavator in a measurement mode.
Fig. 5 is a view explaining a reference bucket angle.
Fig. 6 shows exemplary first measurement data provided by a distance measurement sensor.
Fig. 7 shows exemplary pixel data included on a plane set in a bucket region.
Fig. 8 is a flowchart showing an exemplary process of assisting a manipulation by an operator in the hydraulic excavator.
Fig. 9 is an explanatory view for a process of superimposing first contour data, second contour data, and supplemental contour data on one another.
Fig. 10 is a view explaining a state of a working gear in execution of an excavation operation.
Fig. 11 is a an explanatory view for a process of calculating a cross-sectional area.
Fig. 12 is a an explanatory view for a process of calculating a first volume.

### Description of Embodiments

Hereinafter, an embodiment of the present invention will be described with reference to the accompanying drawings. It should be noted that the following embodiment illustrates one specific example of the present invention, and does not delimit the protection scope of the present invention.

Hereinafter, a measurement device and a manipulation assistive system including the measurement device according to present embodiments will be described. A case where the manipulation assistive system is mounted on a hydraulic excavator will be described below as an example. A part of structural elements of each of the measurement device and the manipulation assistive system may be mounted on the hydraulic excavator, and the remaining structural elements may be mounted on an external device. Examples of the external device include a cloud server. The measurement device may be mounted on a construction machine other than a hydraulic excavator 1. Alternatively, the measurement device and the manipulation assistive system may be mounted on a working machine other than the construction machine. The working machine may include any machine as long as the machine causes a container to contain an object. For instance, the working machine includes an arm member having one or more joints for allowing a posture of the arm member to be changed, and a container rotatably attached to a distal end of the arm member. The container has an opening and is used to contain an object, such as soil and sand, and particles.

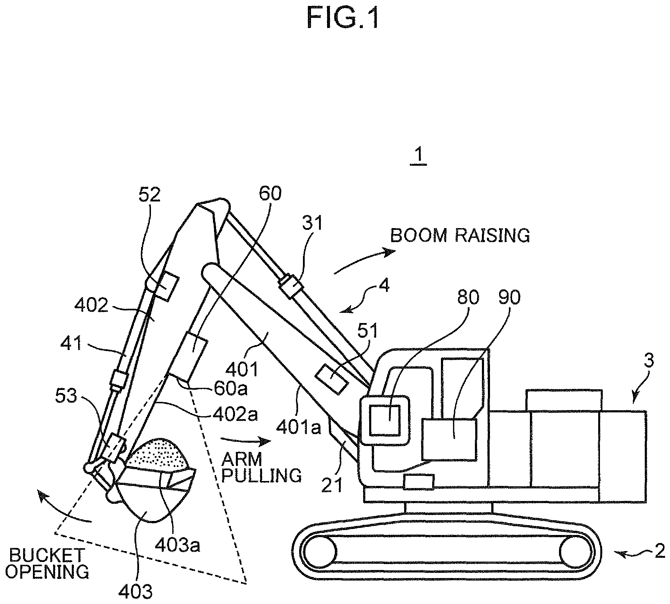

Fig. 1 shows an example of an exterior appearance-based configuration of the hydraulic excavator 1. The hydraulic excavator 1 includes a lower traveling body 2, an upper slewing body 3, and a working gear 4. The lower traveling body 2 includes, for example, a crawler configured to travel on the ground. The upper slewing body 3 is mounted on an upper portion of the lower traveling body 2 slewably about a vertical axis with respect to the lower traveling body 2. The upper slewing body 3 is mounted with a display part 80 and a controller 90. The upper slewing body 3 is an example of the main body. The display part 80 is provided to an operator seat, and displays various information to the operator. The controller 90 controls the entirety of the hydraulic excavator 1.

The working gear 4 is used to perform a work or task, e.g., an excavation task. The working gear 4 includes a boom 401, an arm 402, and a bucket 403. The boom 401 is tiltably attached to a front end of the upper slewing body 3. The arm 402 is attached to a distal end of the boom 401 rotatably about a horizontal axis. The bucket 403 is rotatably attached to a distal end of the arm 402. The bucket 403 is an exemplary container for containing an object. The boom 401 and the arm 402 exemplify an arm member. The bucket 403 has an opening 403a. The bucket 403 is configured to contain soil and sand which enters through the opening 403a in the excavation task. The object is exemplified by the soil and sand.

The hydraulic excavator 1 further includes a boom cylinder 21, an arm cylinder 31, and a bucket cylinder 41.

The boom cylinder 21 is located between the upper slewing body 3 and the boom 401. The boom cylinder 21 extends and contracts to raise and lower the boom 401.

The arm cylinder 31 is located between the boom 401 and the arm 402. The arm cylinder 31 extends and contracts to rotate the arm 402.

The bucket cylinder 41 is located between the arm 402 and the bucket 403. The bucket cylinder 41 extends and contracts to rotate the bucket 403.

The hydraulic excavator 1 further includes a boom angle sensor 51, an arm angle sensor 52, and a bucket angle sensor 53.

The boom angle sensor 51 detects a boom angle representing a tilt angle of the boom 401 with respect to the upper slewing body 3. The boom angle sensor 51 is provided, for example, at a proximal end of the boom 401.

The arm angle sensor 52 detects an arm angle representing a rotation angle of the arm 402 with respect to the boom 401. The arm angle sensor 52 is provided, for example, at a proximal end of the arm 402. The bucket angle sensor 53 detects a bucket angle representing a rotation angle of the bucket 403 with respect to the arm 402. The bucket angle sensor 53 is provided, for example, at the distal end of the arm 402.

A distance measurement sensor 60 (which is an example of the distance detector) is arranged at the working gear 4, and provides measurement data indicating a distance to a subject. Examples of the distance measurement sensor 60 include a sensor, such as a TOF (Time of Flight) sensor or a stereo camera, which can measure a depth degree for each of pixels. The distance measurement sensor 60 may be a LIDAR.

The distance measurement sensor 60 is arranged on a rear surface 402a of the arm 402. The distance measurement sensor 60 has a sensor surface 60a oriented toward the bucket 403. The distance measurement sensor 60 having this configuration can measure contour data of an inner surface of the bucket 403 and the soil and sand contained in the bucket 403. The rear surface 402a is a surface facing the opening 403a of the bucket 403.

The distance measurement sensor 60 may be configured to be attachable to and detachable from the rear surface 402a. With this configuration, the working gear 4 in the embodiment is mountable onto another already-existing hydraulic excavator 1. In this case, a measurement mode to be described later is executed and first contour data and posture data to be described later is stored in a memory every time the distance measurement sensor 60 is attached. Besides, the measurement mode may be executed in replacement of the bucket 403 after the distance measurement sensor 60 is attached. The distance measurement sensor 60 may be included as a default for the hydraulic excavator 1. In this case, the measurement mode is executed, for example, every time the bucket 403 is replaced with another one.

In the embodiment, the hydraulic excavator 1 includes a semi-automatic operation mode for semi-automatically performing an excavation operation and a raising operation in response to a manipulation by the operator to the arm 402. The excavation operation is an example of the scooping operation. In the semi-automatic operation mode, the operator has only to manipulate an arm manipulating device. The controller 90 causes the working gear 4 to start the excavation operation in response to a start of the manipulation of the arm manipulating device. The excavation operation causes a distal end of the bucket 403 to automatically move in parallel to the ground in a state where the bucket 403 advances under the ground. When the bucket 403 contains the soil and sand through the excavation operation, the raising operation is started. The raising operation includes a series of automatic actions of raising the bucket 403 containing the soil and sand, slewing the upper slewing body 3, and discharging the soil and sand by opening the bucket 403 at a predetermined position.

When the arm manipulating device is returned to a neutral position in response to a manipulation by the operator in the excavation operation, the controller 90 suspends the excavation operation. The suspension is performed in the raising operation in the same manner. A moving speed of the bucket 403 in each of the excavation operation and the raising operation is set to a value corresponding to a manipulation amount input to the arm manipulating device.

As described above, the operator has only to manipulate the arm 402, and thereafter the controller 90 automatically executes the excavation operation and the raising operation in the semi-automatic operation mode. Therefore, even an inexperienced operator for maneuvering the hydraulic excavator 1 can smoothly proceed with the excavation operation and the raising operation.

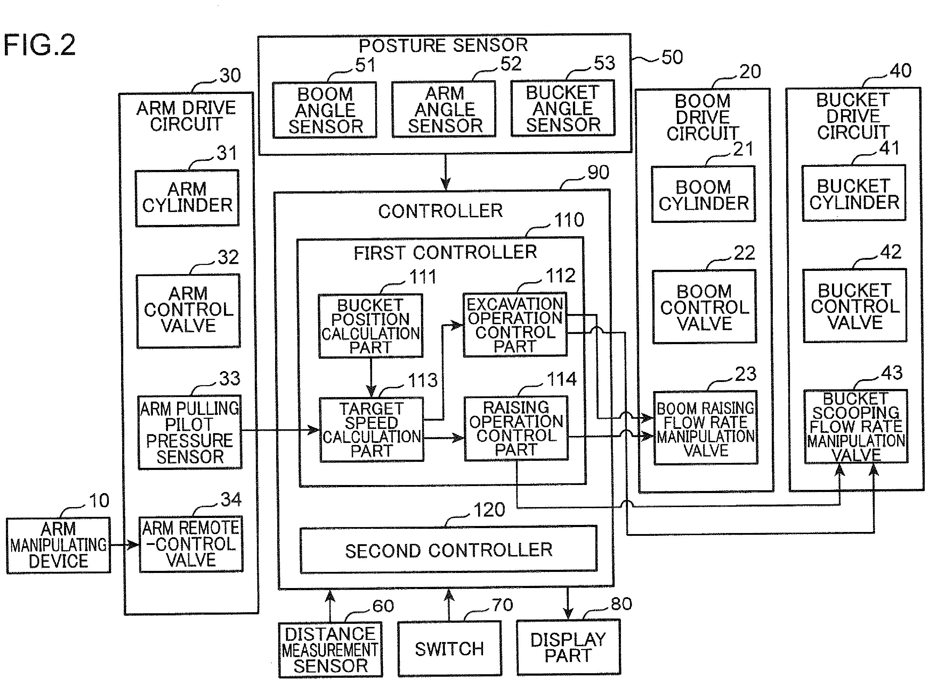

Fig. 2 is a block diagram showing an example of a configuration of the hydraulic excavator 1. The hydraulic excavator 1 includes an arm manipulating device 10, a boom drive circuit 20, an arm drive circuit 30, a bucket drive circuit 40, a posture sensor 50 (which is an example of the posture detector), and a switch 70 in addition to the controller 90, the distance measurement sensor 60, and the display part 80 each shown in Fig. 1. The block diagram in Fig. 2 shows only blocks required to execute the semi-automatic operation mode without illustration of blocks required to execute a manual mode.

The manual mode causes the hydraulic excavator 1 to perform an operation, such as the excavation operation and the raising operation, only in response to the manipulation by the operator without any assistance of the controller 90. In the present invention, each of the excavation operation and the raising operation is not limited to execution in the semi-automatic operation mode, and may be executed in the manual mode or a fully-automatic operation mode. The fully-automatic mode enables automatic execution of each of the excavation operation and the raising operation without relying on a manipulation by the operator to the arm 402. In the fully-automatic mode, the operator has only to execute an input through, for example, an excavation start button. Then, the controller 90 sets the moving speed of the bucket 403 to a predetermined speed to thereby automatically execute the excavation operation and the raising operation.

The arm manipulating device 10 receives an input of an arm manipulation by the operator for moving the arm 402. The arm manipulation includes an arm pulling manipulation of moving the distal end of the arm 402 toward the upper slewing body 3 and an arm pushing manipulation of moving the distal end of the arm 402 away from the upper slewing body 3.

The arm drive circuit 30 is a hydraulic circuit for driving the arm 402. The arm drive circuit 30 includes an arm control valve 32, an arm pulling pilot pressure sensor 33, and an arm remote-control valve 34 in addition to the arm cylinder 31 shown in Fig. 1.

The arm cylinder 31 extends and contracts in response to a supply of a hydraulic fluid from a hydraulic pump, thereby causing the arm 402 to perform an arm pulling operation and an arm pushing operation.

The arm control valve 32 is formed of a pilot-operative three-way switch valve having an arm pulling pilot port and an arm pushing pilot port. The arm control valve 32 opens at a stroke corresponding to an arm pulling pilot pressure input to the arm pulling pilot port. Owing to the opening of the valve, the flow rate and the flow direction of the hydraulic fluid supplied to the arm cylinder 31 are regulated, and the speed and the direction of the arm 402 are controlled, so that the arm 402 performs the arm pulling operation. The arm control valve 32 opens at a stroke corresponding to an arm pushing pilot pressure input to the arm pushing pilot port. Owing to the opening of the valve, the flow rate and the flow direction of the hydraulic fluid supplied to the arm cylinder 31 are regulated, and the speed and the direction of the arm 402 are controlled, so that the arm 402 performs the arm pushing operation.

The arm pulling pilot pressure sensor 33 detects the arm pulling pilot pressure input to the arm pulling pilot port of the arm control valve 32, and inputs the detected arm pulling pilot pressure to the controller 90.

The arm remote-control valve 34 inputs, to the arm pulling pilot port of the arm control valve 32, the arm pulling pilot pressure corresponding to a manipulation amount of the arm pulling manipulation input to the arm manipulating device 10. The arm remote-control valve 34 inputs, to the arm pushing pilot port of the arm control valve 32, the arm pushing pilot pressure corresponding to a manipulation amount of the arm pushing manipulation input to the arm manipulating device 10.

The boom drive circuit 20 is a hydraulic circuit for driving the boom 401. The boom drive circuit 20 includes a boom control valve 22 and a boom raising flow rate manipulation valve 23 in addition to the boom cylinder 21 shown in Fig. 1.

The boom cylinder 21 extends and contracts in response to the supply of the hydraulic fluid from the hydraulic pump, thereby causing the boom 401 to perform a boom raising operation and a boom lowering operation.

The boom control valve 22 is formed of a pilot-operative three-way switch valve having a boom pulling pilot port and a boom pushing pilot port. The boom control valve 22 opens at a stroke corresponding to a boom raising pilot pressure input to the boom raising pilot port. Owing to the opening of the valve, the flow rate and the flow direction of the hydraulic fluid supplied to the boom cylinder 21 are regulated, and the speed and the direction of the boom 401 are controlled, so that the boom 401 performs the boom raising operation. The boom control valve 22 opens at a stroke corresponding to a boom lowering pilot pressure input to the boom lowering pilot port. Owing to the opening of the valve, the flow rate and the flow direction of the hydraulic fluid supplied to the boom cylinder 21 are regulated, and the speed and the direction of the boom 401 are controlled, so that the boom 401 performs the boom lowering operation.

The boom raising flow rate manipulation valve 23 reduces the pilot pressure input from an unillustrated pilot hydraulic pressure source to the pilot port in response to a boom flow rate instruction signal input from the controller 90. In this manner, the controller 90 automatically regulates the pilot pressure input to the boom raising pilot port through the boom raising flow rate manipulation valve 23.

The bucket drive circuit 40 is a hydraulic circuit for driving the bucket 403. The bucket drive circuit 40 includes a bucket control valve 42 and a bucket scooping flow rate manipulation valve 43 in addition to the bucket cylinder 41 shown in Fig. 1.

The bucket cylinder 41 extends and contracts in response to the supply of the hydraulic fluid from the hydraulic pump, thereby causing the bucket 403 to perform a bucket scooping operation and a bucket opening operation.

The bucket control valve 42 is formed of a pilot-operative three-way switch valve having a bucket scooping pilot port and a bucket opening pilot port. The bucket control valve 42 opens at a stroke corresponding to a bucket scooping pilot pressure input to the bucket scooping pilot port. Owing to the opening of the valve, the flow rate and the flow direction of the hydraulic fluid supplied to the bucket cylinder 41 are regulated, and the speed and the direction of the bucket 403 are controlled, so that the bucket 403 performs the bucket scooping operation. The bucket control valve 42 opens at a stroke corresponding to a bucket opening pilot pressure input to the bucket opening pilot port. Owing to the opening of the valve, the flow rate and the flow direction of the hydraulic fluid supplied to the bucket cylinder 41 are regulated, and the speed and the direction of the bucket 403 are controlled, so that the bucket 403 performs the bucket opening operation.

The bucket scooping flow rate manipulation valve 43 reduces the pilot pressure input from the unillustrated pilot hydraulic pressure source to the bucket scooping pilot port in response to a bucket flow rate instruction signal input from the controller 90. In this manner, the controller 90 automatically regulates the pilot pressure input to the bucket scooping pilot port through the bucket scooping flow rate manipulation valve 43.

The posture sensor 50 includes the boom angle sensor 51, the arm angle sensor 52, and the bucket angle sensor 53 each shown in Fig. 1.

The boom angle sensor 51, the arm angle sensor 52, and the bucket angle sensor 53 respectively input a boom angle, an arm angle, and a bucket angle to the controller 90 in, for example, a predetermined calculation period.

The distance measurement sensor 60 inputs the measurement data provided in the predetermined calculation period to the controller 90. The measurement data includes distance image data indicating a depth degree of a certain subject in a view filed of the distance measurement sensor 60 for each of pixels.

The switch 70 receives an input of a manipulation by the operator for changing the mode of the hydraulic excavator 1. The switch 70 may be a physical switch provided to the operator seat, or may be a graphical user interface displayed on the display part 80.

The controller 90 includes, for example, a computer including a CPU and a memory, or a dedicated electric circuit. The controller 90 includes a first controller 110 and a second controller 120.

The first controller 110 controls the hydraulic excavator 1 in the semi-automatic operation mode. The first controller 110 includes a bucket position calculation part 111, an excavation operation control part 112, a target speed calculation part 113, and a raising operation control part 114.

The bucket position calculation part 111 calculates a position of a specific portion of the bucket 403, based on the boom angle, the arm angle, and the bucket angle respectively measured by the boom angle sensor 51, the arm angle sensor 52, and the bucket angle sensor 53. An example of the specific portion is a distal end position of the bucket 403. The position of the specific portion is calculated by, for example, using a geometric calculation based on a boom length, an arm length, and a bucket length each having been known, and based on the measured boom angle, arm angle, and bucket angle. The distal end position is calculated, for example, in a predetermined calculation period.

The target speed calculation part 113 calculates a target speed of each of the boom 401 and the bucket 403, based on the arm pulling pilot pressure measured by the arm pulling pilot pressure sensor 33 and the position of the specific portion of the bucket 403 calculated by the bucket position calculation part 111.

The target speed of the boom 401 in the excavation operation represents, for example, a target speed in a raising direction of the boom 401 for bringing a formation surface closer to a predetermined target formation surface. The target speed of the bucket 403 in the excavation operation represents a target speed of the bucket 403 for automatically moving the specific portion of the bucket 403 along the target formation surface in parallel thereto in accordance with the arm pulling operation.

The target speed of the boom 401 in the raising operation represents, for example, a target speed in the raising direction of the boom 401 for moving the bucket 403 to a predetermined discharge position after a finish of the excavation operation. The target speed of the bucket 403 in the raising operation represents, for example, a target speed in a scooping direction of the bucket 403 for moving the bucket 403 to the predetermined discharge position after the finish of the excavation operation.

The excavation operation control part 112 controls the boom raising flow rate manipulation valve 23 and the bucket scooping flow rate manipulation valve 43 so that each of the boom 401 and the bucket 403 operates at the corresponding target speed of each of the boom 401 and the bucket 403 in the excavation operation as calculated by the target speed calculation part 113. This control attains semi-automatic execution of the excavation operation.

The raising operation control part 114 controls the boom raising flow rate manipulation valve 23 and the bucket scooping flow rate manipulation valve 43 so that each of the boom 401 and the bucket 403 operates at the corresponding target speed of each of the boom 401 and the bucket 403 in the raising operation as calculated by the target speed calculation part 113. This control attains semi-automatic execution of the raising operation.

In the embodiment, a manipulation assisting part 131 included in the second controller 120 to be described later performs shifting from the excavation operation to the raising operation.

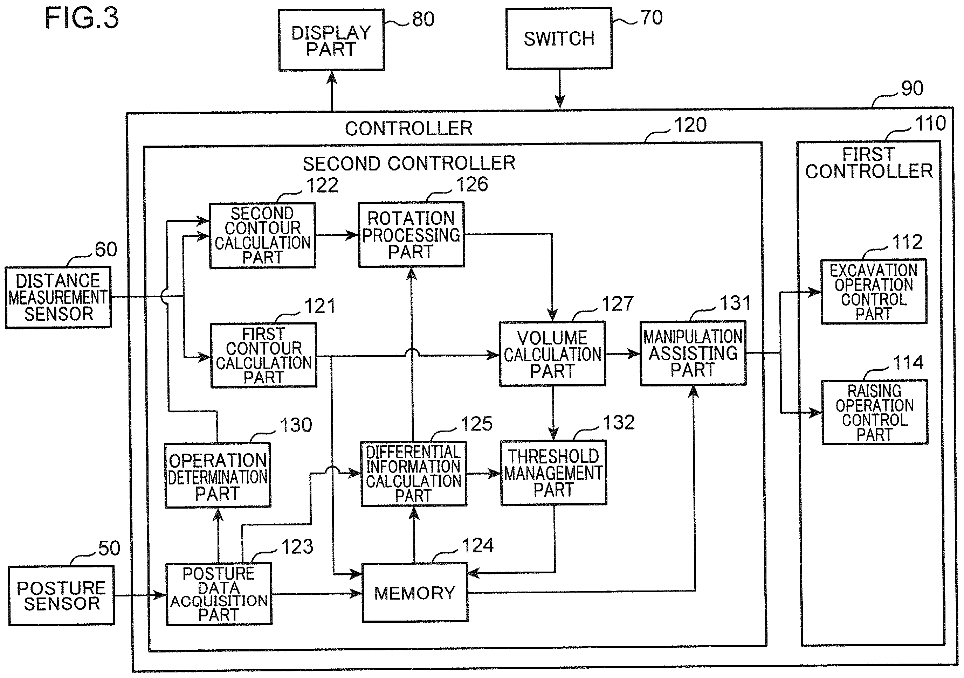

The second controller 120 calculates a first volume indicating the volume of the soil and sand contained in the bucket 403, and assists, based on the first volume, a manipulation by the operator. Fig. 3 is a block diagram showing an example of the configuration of the hydraulic excavator 1 with a focus on the second controller 120.

The second controller 120 includes a first contour calculation part 121, a second contour calculation part 122, a posture data acquisition part 123, a memory 124, a differential information calculation part 125, a rotation processing part 126, a volume calculation part 127, the operation determination part 130, the manipulation assisting part 131, and a threshold management part 132.

The first contour calculation part 121 calculates, based on first measurement data which is measurement data of the bucket 403 in an empty state provided by the distance measurement sensor 60, first contour data indicating a contour of the bucket 403. For instance, details of the process by the first contour calculation part 121 will be described below. First, the first contour calculation part 121 extracts pixel data having a depth degree of a threshold or lower from a plurality of pieces of pixel data contained in the first measurement data. The threshold is set to a predetermined value to distinguish the pixel data of the hydraulic excavator 1 contained in the first measurement data from pixel data constituting a background of the hydraulic excavator 1. In this manner, the pixel data indicating the bucket 403 in the empty state is extracted from the first measurement data. Next, the first contour calculation part 121 performs three-dimensional coordinate conversion of arranging each of the extracted pieces of pixel data in the three-dimensional coordinate space of the distance measurement sensor 60. Subsequently, the first contour calculation part 121 extracts, as first contour data, pixel data located on a plane parallel to a longitudinal direction of the bucket 403 from the pixel data arranged in the three-dimensional coordinate space. Consequently, the first contour data indicating a contour of the bucket 403 projected onto the plane is obtainable. Here, the plane parallel to the longitudinal direction of the bucket 403 perpendicularly intersects a rotational axis of the bucket 403 about the arm 402.

The posture data acquisition part 123 causes the memory 124 to store first posture data which is posture data at a first time when the first measurement data is provided and the first contour data calculated by the first contour calculation part 121 in association with each other. In the description below, the first posture data includes a bucket angle at the first time. However, the first posture data is not limited thereto, and may include an arm angle and a boom angle at the first time.

In the embodiment, a time when the posture of the bucket 403 reaches a predetermined reference bucket angle through a manipulation by the operator in the measurement mode is defined as the first time. In this case, the posture data acquisition part 123 may monitor the measurement data provided by the posture sensor 50, and cause the memory 124 to store the first contour data calculated by the first contour calculation part 121 and the reference bucket angle in association with each other in response to a detection that the bucket angle reaches the reference bucket angle. However, this case is just an example, and another time, for example, when the operator inputs a measurement instruction to the switch 70 in working of the hydraulic excavator 1 may be adopted as the first time. In this case, the posture data acquisition part 123 may cause the memory 124 to store the bucket angle measured by the posture sensor 50 at the first time and the first contour data in association with each other.

The posture data acquisition part 123 further acquires second posture data provided by the posture sensor 50 at a second time in execution of the excavation operation after the first time. In the description below, the second posture data includes a bucket angle at the second time. However, the second posture data is not limited thereto, and may include an arm angle and a boom angle at the second time.

The memory 124 includes a non-volatile storage device, e.g., a solid state drive and a flush memory. The memory 124 stores the first contour data and the first posture data in association with each other.

When the operation determination part 130 determines that the excavation operation is in the execution, the second contour calculation part 122 calculates second contour data indicating a surface contour of the soil and sand, based on second measurement data which is the measurement data of the soil and sand contained in the bucket 403 provided by the distance measurement sensor 60, at the second time in the execution of the excavation operation. The second time represents a sampling time obtained by dividing, for example, an excavation operation term by a predetermined calculation period. For instance, details of the process by the second contour calculation part 122 will be described below. First, the second contour calculation part 122 extracts pixel data having a depth degree of a threshold or lower from a plurality of pieces of pixel data contained in the second measurement data. The threshold is the same as the aforementioned threshold used by the first contour calculation part 121. In this manner, the pixel data of the soil and sand contained in the bucket 403 and seen from the opening 403a is extracted from the second measurement data. The extracted pixel data may contain pixel data of an edge of the bucket 403. Next, the second contour calculation part 122 performs three-dimensional coordinate conversion of arranging each of the extracted pieces of pixel data in the three-dimensional coordinate space of the distance measurement sensor 60. Subsequently, the second contour calculation part 122 extracts, as second contour data, pixel data located on a plane parallel to the longitudinal direction of the bucket 403 from the pixel data arranged in the three-dimensional coordinate space. Consequently, the second contour data indicating the contour of the soil and sand projected onto the plane is obtainable. The second contour data may be repetitively calculated in a predetermined calculation period in the execution of the excavation operation.

The differential information calculation part 125 calculates differential information indicating a difference between the first posture data and the second posture data which is the posture data provided by the posture sensor 50 at the second time. In the embodiment where the distance measurement sensor 60 is attached to the arm 402, the differential information calculation part 125 calculates, as the differential information, a difference angle between the bucket angle measured by the posture sensor 50 at the second time and the bucket angle stored in the memory 124.

The rotation processing part 126 rotates, based on the differential information, the second contour data in the three-dimensional coordinate space of the distance measurement sensor 60 so that the posture of the working gear 4 from the distance measurement sensor 60 to the bucket 403 at the second time agrees with the posture of the working gear 4 from the distance measurement sensor 60 to the bucket 403 at the first time. In the embodiment, the distance measurement sensor 60 is attached to the arm 402. Therefore, the rotation processing part 126 rotates the second contour data so that the posture of the working gear 4 from the distance measurement sensor 60 to the bucket 403 at the first time agrees with the posture of the working gear 4 from the distance measurement sensor 60 to the bucket 403 at the second time. Specifically, the rotation processing part 126 rotates the second contour data by the difference angle so that the bucket angle at the second time agrees with the bucket angle at the second time.

For instance, in a case where a difference angle Δθ is defined as a value obtained by subtracting the bucket angle at the first time from the bucket angle at the second time, the rotation processing part 126 may rotate the second contour data by executing a matrix calculation of rotating the second contour data on the plane by -Δθ.

The inner surface of the bucket 403 is viewed in different ways from the distance measurement sensor 60 depending on the bucket angle. However, the second contour data rotated in the aforementioned manner can correspond to contour data as provided at the same bucket angle as the bucket angle at the first time.

The volume calculation part 127 specifies a region defined by supplemental contour data for supplementing the surface contour of the soil and sand contained in the bucket 403 in the execution of the excavation operation, the second contour data rotated by the rotation processing part 126, and the first contour data stored in the memory 124, and calculates, based on the specified region, a first volume indicating the volume of the soil and sand contained in the bucket 403 at the second time. Specifically, the volume calculation part 127 may calculate an area of the region as a cross-sectional area of the soil and sand contained in the bucket 403, and calculate the first volume by multiplying the cross-sectional area by a width of the bucket 403.

Here, the volume calculation part 127 may calculate the cross-sectional area by dividing the region into a plurality of trapezoidal sections and adding an area of each of the trapezoidal sections.

The volume calculation part 127 further calculates a second volume indicating the volume of the object contained in the bucket 403 in execution of the raising operation. Details of a process by each of the second contour calculation part 122, the rotation processing part 126, and the volume calculation part 127 in the calculation of the second volume are the same as those of the process of calculating the first volume.

The operation determination part 130 determines, based on the posture data acquired by the posture data acquisition part 123, whether the hydraulic excavator 1 executes the excavation operation. For instance, the operation determination part 130 determines that the excavation operation is in the execution when each of the boom angle, the arm angle, and the bucket angle satisfies a predetermined excavation posture criterion. The excavation posture criterion includes an angle range for each of the boom angle, the arm angle, and the bucket angle. The angle range serves as such a range that the working gear 4 is estimated to take an excavation posture.

The manipulation assisting part 131 determines whether the first volume calculated by the volume calculation part 127 exceeds a threshold, and assists a manipulation by the operator for shifting an operation of the working gear 4 from the excavation operation to the raising operation of raising the bucket 403 when determining that the first volume exceeds the threshold. The threshold is set to, for example, a value obtained by estimating the volume of the soil and sand contained in the bucket 403 and filling the same through the excavation operation. The threshold is stored in the memory 124.

In the embodiment, the hydraulic excavator 1 is set to the semi-automatic operation mode, and thus, such manipulation assistance is executed in automatic shifting from the excavation operation to the raising operation. However, the shifting is just an example. For instance, when the operation mode of the hydraulic excavator 1 is set to the manual mode, the manipulation assistance may include a notification of a time for the shifting from the excavation operation to the raising operation. In this case, the manipulation assisting part 131 causes the display part 80 to display a message indicating the shifting to the raising operation in response to a detection that the first volume exceeds the threshold. The manipulation assisting part 131 may output a voice including the message from a speaker. The output voice may include a buzzer sound in place of the message.

The threshold management part 132 sets, when the second volume is smaller than a current value of the threshold stored in the memory 124, a new threshold by calculating a difference between the second volume and the current value and adding the difference to the current value.

The switch 70 receives an instruction from the operator for driving the hydraulic excavator 1 in the semi-automatic operation mode, the manual mode, or the fully-automatic mode. The switch 70 further receives an instruction from the operator for setting the operation mode of the hydraulic excavator 1 to the aforementioned measurement mode, or receives a measurement instruction of designating the first time.

When the manual operation mode is set, the display part 80 displays the message for notifying the time for the shifting from the excavation operation to the raising operation. The display part 80 may display an image indicating the volume calculated by the volume calculation part 127. The displayed volume may indicate a volume of the soil and sand excavated in one excavation operation.

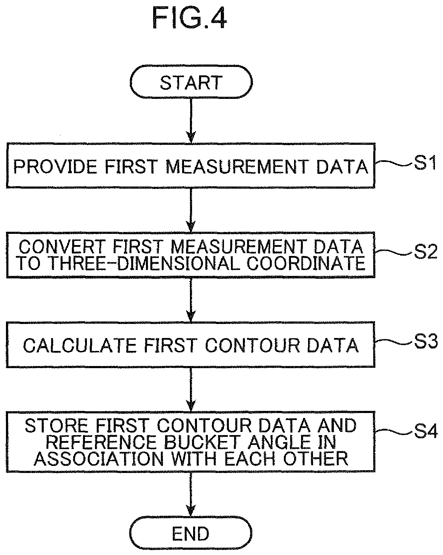

Next, a process in the measurement mode will be described. Fig. 4 is a flowchart showing an exemplary process by the hydraulic excavator 1 in the measurement mode. The measurement mode is started, for example, in response to an input of an instruction from the operator to the switch 70 for setting the operation mode of the hydraulic excavator 1 to the measurement mode.

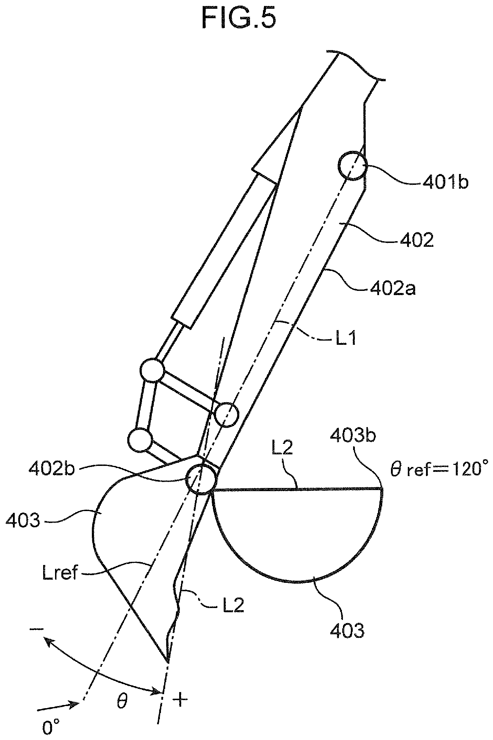

In step S1, the distance measurement sensor 60 provides, as first measurement data, measurement data of the bucket 403 positioned at a reference bucket angle in response to a manipulation by the operator. Fig. 5 is a view explaining a reference bucket angle θref. The example in Fig. 5 shows the arm 402 and the bucket 403 viewed in a widthwise direction. Here, the widthwise direction is parallel to the rotational axis of the bucket 403. A longitudinal direction L1 represents a direction in which a straight line connecting a distal end 401b of the boom 403 and a distal end 402b of the arm 402 to each other extends.

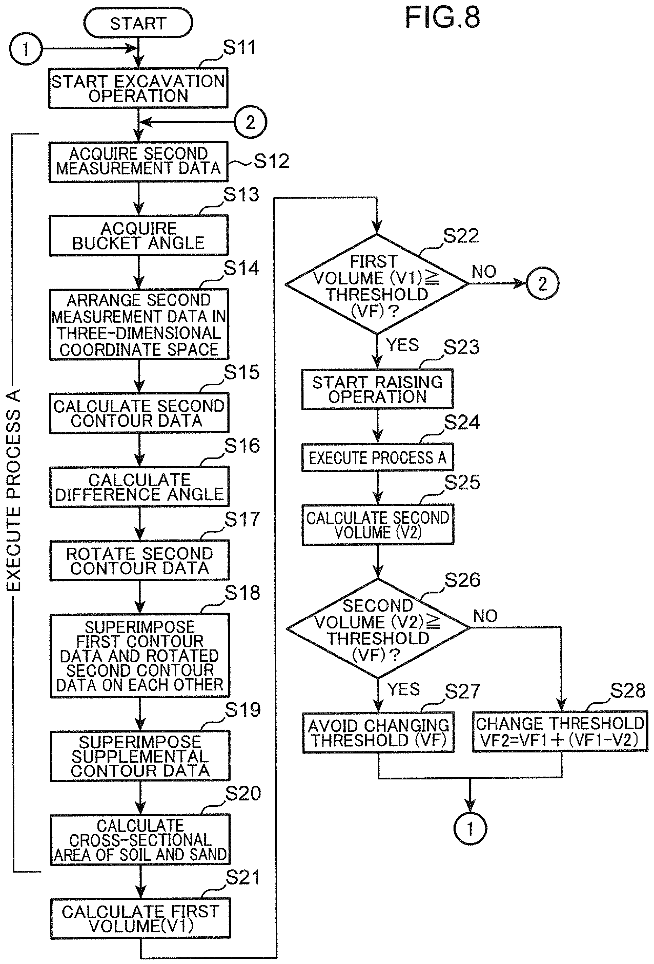

In the example shown in Fig. 5, a bucket angle θ is defined between a longitudinal direction L2 of the bucket 403 and a reference direction Lref. The longitudinal direction L2 represents a direction in which a straight line connecting the distal end 402b of the arm 402 and a distal end 403b of the bucket 403 to each other extends. The reference direction Lref corresponds to the longitudinal direction L2 when the longitudinal direction L1 and the longitudinal direction L2 align. The bucket angle θ takes a plus value in a rotation direction (counterclockwise direction in the example shown in Fig. 5) in which the distal end 403b rotates closer to the rear surface 402a of the arm 402 from the reference direction Lref, and takes a minus value in another rotation direction (clockwise direction in the example shown in Fig. 8) in which the distal end 403b rotates away from the rear surface 402a. The relation between the plus value and the minus value may be oppositely defined.

An example of the reference bucket angle θref is 120°. However, any angle may be adopted as the reference bucket angle θref under the condition that the whole area of the inner surface of the bucket 403 falls within the view filed of the distance measurement sensor 60.

The second controller 120 may cause the display part 80 to display an image encouraging the operator to perform a manipulation of setting the bucket angle of the bucket 403 in the empty state to the reference bucket angle at the start of the measurement mode.

Referring back to Fig. 4, in step S2, the first contour calculation part 121 performs three-dimensional coordinate conversion of arranging the first measurement data provided in step S1 in the three-dimensional coordinate space.

In step S3, the first contour calculation part 121 calculates, as first contour data, pixel data located on a plane parallel to the longitudinal direction of the bucket 403 among the pixel data arranged in the three-dimensional coordinate space.

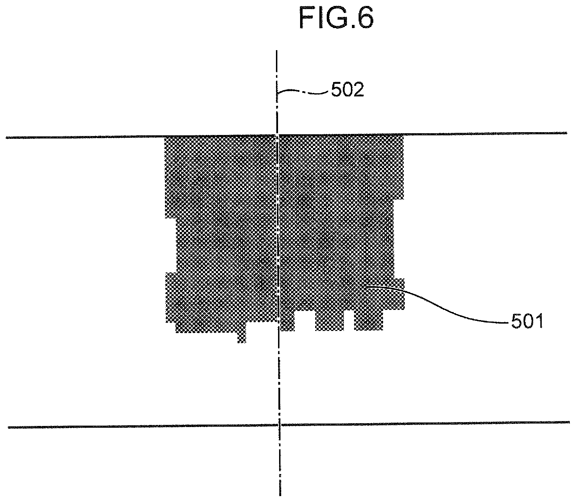

Fig. 6 shows exemplary first measurement data provided by the distance measurement sensor 60. It is seen from Fig. 6 that the first measurement data includes: a bucket region 501 having pixel data indicating an inner surface of the bucket 403 viewed from the opening 403a; and a background of the bucket 403. Here, the density of the bucket region 501 is uniformly expressed for convenience, but is actually expressed in gradation in accordance with a distance between the distance measurement sensor 60 and the bucket 403. Besides, the density of the background is expressed in a single color, i.e., white color, but the density is actually expressed in gradation in accordance with a distance between a certain object, e.g., ground, existing around the bucket 403 and the distance measurement sensor 60.

The first contour calculation part 121 extracts pixel data having a depth degree of a threshold or lower from the first measurement data shown in Fig. 6, and arranges the extracted pixel data in the three-dimensional coordinate space. In this manner, the pixel data constituting the bucket region 501 is arranged in the three-dimensional coordinate space.

The first contour calculation part 121 sets a plane 502 for pixel data arranged in the three-dimensional coordinate space. The plane 502 is parallel to the longitudinal direction L2 of the bucket 403 and perpendicularly intersects an opening plane of the bucket 403. Furthermore, the plane 502 is set to almost the center in a width direction of the bucket 403. Subsequently, the first contour calculation part 121 extracts pixel data included on the plane 502 from the pixel data of the bucket region 501.

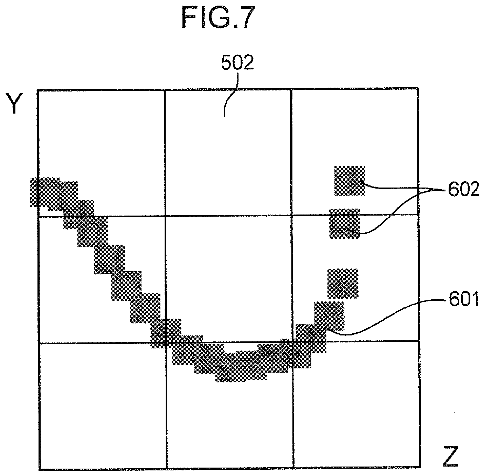

Fig. 7 shows exemplary pixel data included on the plane 502 set in a bucket region 501. The plane 502 has a Y-axis set in a vertical direction thereof and a Z-axis set in a horizontal direction thereof. The Y-axis denotes a height direction in the three-dimensional coordinate space of the distance measurement sensor 60. The Z-axis denotes a depth direction in the three-dimensional coordinate space. The three-dimensional coordinate space is expressed by a three-dimensional rectangular coordinate system defined by three axes, i.e., an X-axis, the Y-axis, and the Z-axis. The X-axis denotes the widthwise direction of the hydraulic excavator 1.

The plane 502 includes a plurality of pieces of pixel data 602 indicating the inner surface of the bucket 403 in the empty state. The first contour data 601 is constituted by the pieces of pixel data 602. Accordingly, the first contour data 601 is calculated.

Referring back to Fig. 4, in step S4, the posture data acquisition part 123 causes the memory 124 to store the first contour data and the reference bucket angle in association with each other.

Consequently, the process in the measurement mode is finished. Next, a process of assisting a manipulation of the operator will be described. Fig. 8 is a flowchart showing an exemplary process of assisting a manipulation by the operator in the hydraulic excavator 1.

In step S11, the excavation operation control part 112 starts an excavation operation. The excavation operation is triggered to start by, for example, a manipulation by the operator to the arm manipulating device 10.

In step S12, the distance measurement sensor 60 provides second measurement data which is measurement data at a second time. In step S13, the posture data acquisition part 123 acquires a bucket angle measured by the posture sensor 50 at the second time.

In step S14, the second contour calculation part 122 extracts pixel data having a depth degree of a threshold or lower from the second measurement data, and arranges the extracted pixel data in the three-dimensional coordinate space.

In step S15, the second contour calculation part 122 calculates the second contour data by extracting pixel data on the plane 502 from the pixel data arranged in the three-dimensional coordinate space. Accordingly, the second contour data indicating a surface contour of the soil and sand contained in the bucket 403 at the second time is obtained.

In step S16, the differential information calculation part 125 calculates a difference angle between the bucket angle acquired in step S13 and the reference bucket angle stored in the memory 124.

In step S17, the rotation processing part 126 rotates the second contour data calculated in step S15 by the difference angle calculated in step S16. The rotation process is described in detail above, and thus further explanation therefor is omitted here.

In step S18, the volume calculation part 127 superimposes the first contour data and the second contour data rotated in step S16 onto the plane 502. In step S19, the volume calculation part 127 further superimpose supplemental contour data onto the plane 502.

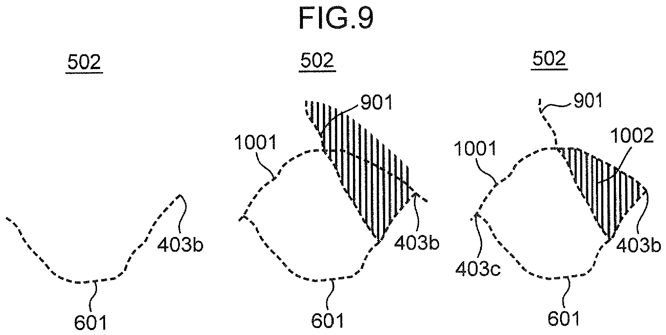

Fig. 9 is an explanatory view of a process of superimposing the first contour data 601, second contour data 901, and supplemental contour data 1001 on one another. In Fig. 9, the left view shows the first contour data 601 stored in the memory 124, the middle view shows a state where first contour data 601 and the rotated second contour data 901 are superimposed onto the plane 502, and the right view shows a state where the supplemental contour data 1001 is further superimposed thereon in addition to the state shown in the middle view.

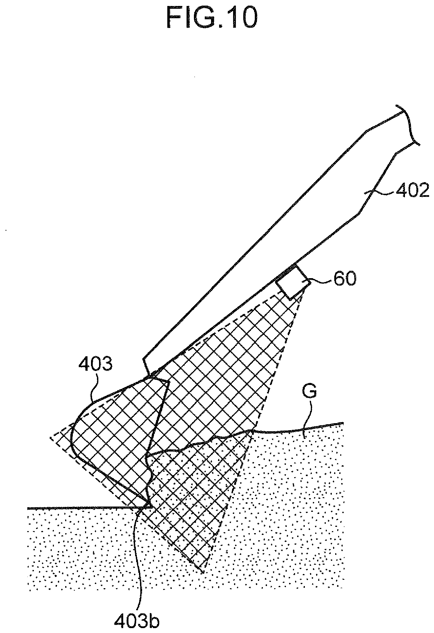

As shown in the middle view, the second contour data 901 corresponds to contour data as provided at the same bucket angle as the reference bucket angle owing to the rotation process. In this manner, the second contour data 901 corresponds to the contour data measured when the bucket 403 takes the same posture as the posture indicated by the first contour data 601. Fig. 10 is a view explaining a state of the working gear 4 in the execution of the excavation operation. The distal end 403b of the bucket 403 advances under the ground G when seen from the distance measurement sensor 60 in the execution of the excavation operation, and hence, the distance measurement sensor 60 may not measure the whole area of the surface contour of the soil and sand contained in the bucket 403. In this case, as shown in the middle view in Fig. 9, a region to be defined by the first contour data 601 and the second contour data 901 is unobtainable, and thus the volume calculation part 127 may not calculate the volume of the soil and sand contained in the bucket 403.

To avoid the situation, in the embodiment, as shown in the right view in Fig. 9, the volume calculation part 127 superimposes the supplemental contour data 1001 approximating to the surface contour of the soil and sand contained in the bucket 403 and filling the same through the excavation operation onto the plane 502.

When the bucket 403 is filled with the soil and sand in the excavation operation, and the operation shifts to the raising operation, the surface contour of the soil and sand contained in the bucket 403 results in a curve contour protruding upward to the opening 403a. Here, in the embodiment, the supplemental contour data 1001 is formed of, for example, a quadratic curve approximating to the curve contour. The supplemental contour data 1001 is not limited to the quadratic curve, and may be formed of any curve, e.g., the Gaussian curve, and a spline curve, as long as the curve can approximate to the curve contour of the soil and sand. The supplemental contour data 1001 is created in advance depending on the size of the bucket 403, and stored in the memory 124.

The supplemental contour data 1001 is superimposed on the first contour data 601 and the second contour data 901 so that one end of the supplemental contour data is located at the distal end 403b of the first contour data 601 and the other end thereof is located at a rear end 403c of the first contour data 601. Consequently, the first contour data 601, the second contour data 901, and the supplemental contour data 1001 define a region 1002 including the distal end 403b thereamong, so that the first volume of the soil and sand contained in the bucket 403 is calculatable in the excavation operation.

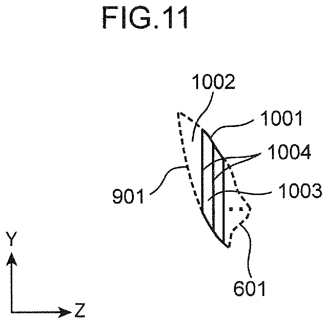

Referring back to Fig. 8, in step S20, the volume calculation part 127 calculates a cross-sectional area of the soil and sand contained in the bucket 403. As shown in the right view in Fig. 9, the volume calculation part 127 extracts the region 1002 including the distal end 403b and defined by the first contour data 601, the rotated second contour data 901, and the supplemental contour data 1001. Here, the region denoted by the diagonal lines is extracted as the region 1002. Subsequently, the volume calculation part 127 calculates a cross-sectional area of the region 1002 in the following manner. Fig. 11 is a an explanatory view for a process of calculating the cross-sectional area.

The volume calculation part 127 having extracted region 1002 divides the region 1002 with a plurality of straight lines 1004 parallel to the Y-axis, and obtains an intersection of each straight line 1004 and the first contour data 601, and an intersection of each straight line 1004 and the second contour data 901. The volume calculation part 127 having obtained such intersections in this manner connects adjacent intersections to each other by a straight line. In this manner, the region 1002 is divided into a plurality of trapezoidal sections 1003 extending in a longitudinal direction which is parallel to the Y-axis and arranged side by side in the Z-axial direction. The volume calculation part 127 having finished the dividing obtains an area of each of the trapezoidal sections 1003, and adding each obtained area. As a result, the area of the region 1002, i.e., the cross-sectional area of the soil and sand, is calculated by way of trapezoidal approximation.

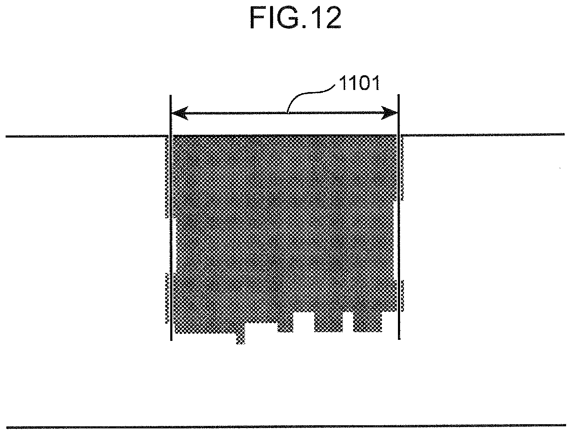

Referring back to Fig. 8, in step S21, the volume calculation part 127 calculates a first volume V1 of the soil and sand contained in the bucket 403 by multiplying the cross-sectional area of the soil and sand calculated in step S20 by a width of the bucket 403. Fig. 12 is a an explanatory view for a process of calculating the first volume. As shown in Fig. 12, the first volume V1 is calculated by multiplying the cross-sectional area of the soil and sand calculated in step S20 by a predetermined width 1101 of the bucket 403. The width 1101 is, for example, stored in the memory 124. Consequently, the first volume V1 at the second time in the excavation operation is calculated.

Referring back to Fig. 8, in step S22, the manipulation assisting part 131 determines whether the first volume V1 is a threshold VF or larger. When the first volume V1 is smaller than the threshold VF (NO in step S22), the flow is returned to the step S12. Thereafter, steps S12 to S22 are repeated until the first volume V1 reaches the threshold VF or larger, and the first volume V1 is repetitively calculated in a predetermined calculation period.

When the first volume V1 is the threshold VF or larger (YES in step S22), the manipulation assisting part 131 finishes the excavation operation and starts the raising operation (step S23). In this case, for instance, the manipulation assisting part 131 may input a finish command of the excavation operation to the excavation operation control part 112, and input a start command of the raising operation to the raising operation control part 114.

In step S24, a process A including steps S12 to S20 is executed. In this manner, various steps for calculating a cross-sectional area of the object contained in the bucket 403 in the raising operation are executed to thereby calculate the cross-sectional area.

In step S25, the volume calculation part 127 calculates a second volume V2 by multiplying the cross-sectional area calculated in step S24 by the width 1101.

In step S26, the volume calculation part 127 determines whether the second volume V2 is the threshold VF or larger. When the second volume V2 is the threshold VF or larger (YES in step S26), the threshold management part 132 avoids changing the threshold VF (step S27). When the second volume V2 is smaller than the threshold VF (NO in step S26), the threshold management part 132 changes the threshold value VF (step S28). Specifically, when a current value of the threshold VF stored in the memory 124 is defined as VF1 and a changed threshold VF is defined as VF2, the threshold management part 132 calculates a difference by VF1-V2. Then, the threshold management part 132 calculates a changed threshold VF2 by VF1+(VF1-V2). The current value VF1 stored in the memory 124 is updated to the changed threshold VF2. Accordingly, the threshold VF is increased when the bucket 403 has an enough capacity to contain the object in the excavation operation, so that the threshold is set to an appropriate value.

When step S27 or step S28 is finished, the flow is returned to step S11. Then, the subsequent excavation operation is started.

As described above, the hydraulic excavator 1 according to the embodiment specifies the region 1002 defined by the supplemental contour data 1001 for supplementing the surface contour of the object contained in the bucket 403 in the execution of the excavation operation, the rotated second contour data 901, and the first contour data 601, and calculates, based on the specified region 1002, the first volume V1 of the object. Consequently, the hydraulic excavator 1 can accurately calculate the first volume V1 of the object contained in the bucket 403 in the execution of the excavation operation.

Furthermore, owing to the memory 124, once the first contour data 601 of the bucket in the empty state is calculated, the first volume V1 of the object at the second time is calculatable from the second contour data 901 thereafter without setting the working gear 4 in a predetermined posture. This results in eliminating the necessity of setting the working gear 4 in the predetermined posture per containing of the object, and thus preventing a decrease in the work efficiency. Moreover, owing to the memory 124, the first volume V1 of the object is calculatable per calculation of the second contour data 901, and thus the process of calculating the first volume V1 is executable in real time.

The present invention can adopt modifications described below.

(1) Although the first contour data 601 is constituted by the pixel data 602 located on the single plane 502 in the example shown in Fig. 7, the present invention is not limited thereto. The first contour data 601 may be constituted by pixel data respectively located on N-planes 502 (in integer, i.e., two or more planes). The second contour data may be constituted by pixel data respectively located on N-planes 502 in the same manner as the first contour data.

In this case, the second controller 120 may calculate the first volume V1 in the following manner. First, the rotation processing part 126 rotates the second contour data 901 respectively located on the N-planes 502 by a difference angle. Subsequently, the volume calculation part 127 calculates N-cross-sectional areas respectively defined by N-pieces of rotated second contour data 901 and N-pieces of first contour data 601 corresponding to the N-pieces of the rotated second contour data 901. For instance, the N-pieces of the first contour data 601 corresponding to the N-pieces of the second contour data mean the first contour data 601 on a first plane 502 for the second contour data 901 on the first plane 502, and mean the first contour data 601 on a second plane 502 for the second contour data 901 on the second plane 502. Subsequently, the volume calculation part 127 calculates a cumulative value of the N-cross-sectional areas as the first volume V1. This configuration can more accurately calculate the first volume V1. This is applicable to the calculation of the second volume V2 in the same manner.

(2) Although the distance measurement sensor 60 is attached to the rear surface 402a of the arm 402 in the example shown in Fig. 1, the present invention is not limited thereto. The distance measurement sensor 60 may be attached to a rear surface 401a of the boom 401.

The process executed by the second controller 120 in this case will be described below. The posture data acquisition part 123 acquires, as first posture data, a bucket angle and an arm angle at a first time, and causes the memory 124 to store the first posture data and first contour data 601 calculated by the first contour calculation part 121 in association with each other. The posture data acquisition part 123 further acquires, as second posture data, a bucket angle and an arm angle at a second time. The differential information calculation part 125 calculates an arm difference angle which is a difference angle between the arm angle at the second time and the arm angle at the first time. The differential information calculation part 125 calculates a bucket difference angle which is a difference angle between the bucket angle at the second time and the bucket angle at the first time. The rotation processing part 126 rotates the second contour data 901 by using the arm difference angle and the bucket difference angle so that the posture of each of the arm 402 and the bucket 403 at the second time respectively agrees with the posture of each of the arm 402 and the bucket 403 at the first time.

When the rotation process is finished, the volume calculation part 127 calculates a first volume V1 by using the rotated second contour data 901 and the first contour data 601 in the same manner as described above.

This configuration can calculate the first volume V1 even in the case where the distance measurement sensor 60 is attached to the boom 401. This is applicable to the calculation of the second volume V2 in the same manner.

Alternatively, the distance measurement sensor 60 may be attached to a front surface of the upper slewing body 3. In this case, calculated, as each difference angle, are a boom difference angle between a boom angle at a first time and a boom angle at a second time, an arm difference angle between an arm angle at the first time and an arm angle at the second time, and a bucket difference angle between a bucket angle at the first time and a bucket angle at the second time. The rotation processing part 126 rotates second contour data 901 by using the boom difference angle, the arm difference angle, and the bucket difference angle so that the posture of each of the boom 401, the arm 402, and the bucket 403 at the second time agrees with the posture of each of the boom 401, the arm 402, and the bucket 403 at the first time.

When the rotation process is finished, the volume calculation part 127 calculates a first volume V1 by using the rotated second contour data 901 and the first contour data in the same manner as described above. This configuration can calculate the first volume V1 even in the case where the distance measurement sensor 60 is attached to the upper slewing body 3. This is applicable to the calculation of the second volume V2 in the same manner.

(3) Although the measurement device is applied to the hydraulic excavator 1 in the embodiment, the present invention is not limited thereto. The measurement device may be applied to a machine, e.g., arm robot, other than a construction machine such as the hydraulic excavator 1. The arm robot includes a main body and a working gear. The working gear includes an arm member rotatably attached to the main body, and a container rotatably attached to a distal end of the arm member. The arm member has one or more joints and allows a posture of the arm member to be changed. The container is configured to contain, for example, an object by a scooping operation and discharge the contained object at a specific position. The object may include granular foods, e.g., popcorns, or a matter other than foods, e.g., beads or powder chemicals. This configuration can calculate the first volume V1 and the second volume V2 of the object contained in the container even in the case where the measurement device is applied to the arm robot.

(4) Although the second controller 120 is mounted on the hydraulic excavator 1 in the example shown in Fig. 1, the present invention is not limited thereto. The second controller 120 may be mounted on a server connected to the hydraulic excavator 1 via a network. In this case, the server may acquire posture data and measurement data respectively from the posture sensor 50 and the distance measurement sensor 60 mounted on the hydraulic excavator 1. The network may be, for example, a local area network, or a wide area network including the internet and a mobile phone communication network.

(5) The volume calculation part 127 may calculate, for example, a weight of the soil and sand by multiplying the calculated first volume V1 by a predetermined specific gravity of the soil and sand, and cause the display part 80 to display the calculated weight. This configuration can notify the operator of the weight of the soil and sand contained in the bucket 403. This is applicable to the calculation of the second volume V2 in the same manner. Furthermore, the volume calculation part 127 may calculate a work quantity of the hydraulic excavator 1 from the calculated weight, and cause the display part 80 to display the calculated work quantity. In this case, the volume calculation part 127 may calculate a total value of the second volume V2 per unit time, e.g., per day, and per hour, and calculate the work quantity per time unit based on the total value.

Additionally, when the total value of the calculated second volume V2 reaches a maximum loading capacity or more of a dump truck serving as a discharge destination of the soil and sand, the volume calculation part 127 may cause the display part 80 to display relevant information indicating the reaching of the capacity or more.

(6) The operation determination part 130 may determine, based on a load applied to the working gear 4 in place of the posture data, whether the excavation operation is in execution. In this case, the operation determination part 130 may determine, from a detection result of a load sensor attached to the working gear 4, whether the hydraulic excavator 1 is in the excavation operation. The load of the working gear 4 in the execution of the excavation operation is estimated to fall within a specific range, and thus determination as to whether the excavation operation is in the execution can be made from the load. The load sensor in this case is an example of the state detector which measures the state of the working gear 4. Moreover, the posture sensor 50 shown in Fig. 3 also is an example of the state detector.

(7) When the aspect of the embodiment is applied to the manual mode, the excavation operation control part 112 and the raising operation control part 114 may regulate the operation of the working gear 4 so that the excavation operation is maintained in the execution of the excavation operation, and the raising operation is maintained in the execution of the raising operation regardless of a manipulation by the operator.

### Summary of embodiment

The embodiment will be summarized below.

A measurement device according to one aspect of the present invention is a measurement device for a working gear including: an arm member tiltably attached to a main body and having one more joints for allowing a posture of the arm member to be changed; and a container roratably attached to the arm member and having an opening for permitting an object to enter and leave the container, the measurement device being configured to measure a volume of the object contained in the container. The measurement device includes: a distance detector which is attached to the arm member or the main body and provides measurement data indicating a distance to a subject; a posture detector which provides posture data indicating a posture of the working gear; a first contour calculation part which calculates, based on first measurement data which is the measurement data of the container in an empty state provided by the distance detector, first contour data indicating a contour of the container; a memory which stores first posture data which is the posture data at a first time when the first measurement data is provided and the first contour data in association with each other; a second contour calculation part which calculates, based on second measurement data which is the measurement data of the object contained in the container as provided by the distance detector, second contour data indicating a surface contour of the object at a second time in execution of a scooping operation by the container after the first time; a differential information calculation part which calculates differential information indicating a difference between the first posture data and the second posture data which is the posture data provided by the posture detector at the second time; a rotation processing part which rotates, based on the differential information, the second contour data in a three-dimensional coordinate space of the distance detector so that the posture of the working gear from the distance detector to the container at the second time agrees with the posture of the working gear from the distance detector to the container at the first time; and a volume calculation part which specifies a region defined by supplemental contour data for supplementing the surface contour of the object contained in the container in the execution of the scooping operation, the rotated second contour data, and the first contour data, and calculates, based on the specified region, a first volume indicating the volume of the object contained in the container at the second time.

The memory stores the first contour data at the first time and the first posture data of the bucket in the empty state at the first time in association with each other. The second contour data indicating the surface contour of the object is calculated, based on the second measurement data provided at the second time in the execution of the scooping operation by the container after the first time. The differential information indicating a difference between the second posture data of the working gear at the second time and the first posture data of the working gear at the first time is calculated. The second contour data is rotated in the three-dimensional coordinate space of the distance detector so that the posture of the working gear from the distance detector to the container at the second time agrees with the posture of the working gear from the distance detector to the container at the first time. In this manner, the rotated second contour data corresponds to the contour data as provided in the same posture of the container at the first time.

In the execution of the scooping operation, the distal end of the container advances in the group of matters to be scooped up thereby, and thus the distance detector cannot measure the whole area of the contour of the object contained in the container. Hence, this configuration specifies the region defined by the supplemental contour data for supplementing the surface contour of the object contained in the container in the execution of the scooping operation, the rotated second contour data, and the first contour data, and calculates, based on the specified region, the volume of the object contained in the container. Consequently, this configuration can accurately calculate the volume of the object contained in the container in the execution of the scooping operation by the container.

Furthermore, once the first contour data of the bucket in the empty state is calculated, this configuration including the memory can calculate the volume of the object at the second time from the second contour data thereafter without setting the working gear in a predetermined posture. This results in eliminating the necessity of setting the working gear in the predetermined posture per containing of the object, and thus preventing a decrease in the work efficiency. Moreover, this configuration including the memory can calculate the volume of the object per calculation of the second contour data, and thus can execute the process of calculating the volume in real time.

The measurement device preferably further includes: a state detector which detects a state of the working gear; and an operation determination part which determines, based on a detection result of the state detector, whether the scooping operation is in the execution.

This configuration can accurately determine whether the scooping operation is in execution.

A manipulation assistive system according to another aspect of the present invention preferably includes: the measurement device; a manipulating device which receives an input of a manipulation by an operator to the working gear; and a manipulation assisting part which determines whether the first volume exceeds a threshold, and assists the manipulation by the operator for shifting an operation of the working gear from the scooping operation to a raising operation of causing the container to raise the object contained therein when determining that the first volume exceeds the threshold.

When the first volume indicating the volume of the object in the execution of the scooping operation exceeds the threshold, this configuration performs manipulation assistance for shifting the operation of the working gear from the scooping operation to the raising operation. The shifting results in reducing a manipulation burden on the operator.

In the manipulation assistive system, preferably, the manipulation assisting part automatically performs shifting from the scooping operation to the raising operation when determining that the first volume exceeds the threshold.

When the first volume of the object exceeds the threshold, this configuration automatically performs the shifting from the scooping operation to the raising operation. Therefore, the operator can automatically start the raising operation without inputting an instruction for the shifting from the scooping operation to the raising operation. Additionally, when the volume of the object reaches an appropriate value, the scooping operation can be finished and the raising operation can be started.

In the manipulation assistive system, the manipulation assisting part preferably notifies a time for the shifting from the scooping operation to the raising operation when determining that the first volume exceeds the threshold.

According to the configuration, the shifting from the scooping operation to the raising operation is notified when the first volume of the object exceeds the threshold, and thus the operator can appropriately input the manipulation for the shifting at an appropriate time.

In the manipulation assistive system, the volume calculation part preferably further calculates a second volume indicating the volume of the object contained in the container in execution of the raising operation. The manipulation assistive system preferably further includes a threshold management part which sets, when the second volume is smaller than a current value of the threshold, a new threshold by calculating a difference between the second volume and the current value and adding the difference to the current value.

The fact that the second volume of the object contained in the container is below the threshold in the execution of the raising operation implies an enough capacity of the container for the volume of the object to be contained in the container in the execution of the scooping operation. In this configuration, when the second volume is below the threshold, the threshold is increased by the difference between the second volume and the threshold. Accordingly, an appropriate value is settable.

A construction machine according to further another aspect includes: a working gear including an arm member tiltably attached to a main body and having one more joints for allowing a posture of the arm member to be changed, and a bucket roratably attached to the arm member; a distance detector which is attached to the arm member or the main body and provides measurement data indicating a distance to a subject; a posture detector which provides posture data indicating a posture of the working gear; a first contour calculation part which calculates, based on first measurement data which is the measurement data of the bucket in an empty state provided by the distance detector, first contour data indicating a contour of the bucket; a memory which stores first posture data which is the posture data at a first time when the first measurement data is provided and the first contour data in association with each other; a second contour calculation part which calculates, based on second measurement data which is the measurement data of soil and sand contained in the bucket as provided by the distance detector, second contour data indicating a surface contour of the soil and sand at a second time in execution of an excavation operation by the bucket after the first time; a differential information calculation part which calculates differential information indicating a difference between the first posture data and the second posture data which is the posture data provided by the posture detector at the second time; a rotation processing part which rotates, based on the differential information, the second contour data in a three-dimensional coordinate space of the distance detector so that the posture of the working gear from the distance detector to the bucket at the second time agrees with the posture of the working gear from the distance detector to the bucket at the first time; and a volume calculation part which specifies a region defined by supplemental contour data for supplementing the surface contour of the object contained in the bucket in the execution of the excavation operation, the rotated second contour data, and the first contour data, and calculates, based on the specified region, a first volume indicating the volume of the soil and sand contained in the bucket at the second time.

This configuration succeeds in providing a construction machine which can accurately calculate a volume of an object contained in a bucket in execution of an excavation operation.

## Claims

1. A measurement device for a working gear including: an arm member tiltably attached to a main body and having one more joints for allowing a posture of the arm member to be changed; and a container roratably attached to the arm member and having an opening for permitting an object to enter and leave the container, the measurement device being configured to measure a volume of the object contained in the container, and comprising:
a distance detector which is attached to the arm member or the main body and provides measurement data indicating a distance to a subject;
a posture detector which provides posture data indicating a posture of the working gear;
a first contour calculation part which calculates, based on first measurement data which is the measurement data of the container in an empty state provided by the distance detector, first contour data indicating a contour of the container;
a memory which stores first posture data which is the posture data at a first time when the first measurement data is provided and the first contour data in association with each other;
a second contour calculation part which calculates, based on second measurement data which is the measurement data of the object contained in the container as provided by the distance detector, second contour data indicating a surface contour of the object at a second time in execution of a scooping operation by the container after the first time;
a differential information calculation part which calculates differential information indicating a difference between the first posture data and the second posture data which is the posture data provided by the posture detector at the second time;
a rotation processing part which rotates, based on the differential information, the second contour data in a three-dimensional coordinate space of the distance detector so that the posture of the working gear from the distance detector to the container at the second time agrees with the posture of the working gear from the distance detector to the container at the first time; and
a volume calculation part which specifies a region defined by supplemental contour data for supplementing the surface contour of the object contained in the container in the execution of the scooping operation, the rotated second contour data, and the first contour data, and calculates, based on the specified region, a first volume indicating the volume of the object contained in the container at the second time.

2. The measurement device according to claim 1, further comprising:
a state detector which detects a state of the working gear; and
an operation determination part which determines, based on a detection result of the state detector, whether the scooping operation is in the execution.

3. A manipulation assistive system comprising:
the measurement device according to claim 1;
a manipulating device which receives an input of a manipulation by an operator to the working gear; and
a manipulation assisting part which determines whether the first volume exceeds a threshold, and assists the manipulation by the operator for shifting an operation of the working gear from the scooping operation to a raising operation of causing the container to raise the object contained therein when determining that the first volume exceeds the threshold.

4. The manipulation assistive system according to claim 3, wherein
the manipulation assisting part automatically performs shifting from the scooping operation to the raising operation when determining that the first volume exceeds the threshold.

5. The manipulation assistive system according to claim 3, wherein
the manipulation assisting part notifies a time for the shifting from the scooping operation to the raising operation when determining that the first volume exceeds the threshold.

6. The manipulation assistive system according to any one of claims 3 to 5, wherein
the volume calculation part further calculates a second volume indicating the volume of the object contained in the container in execution of the raising operation,
the manipulation assistive system further comprising a threshold management part which sets, when the second volume is smaller than a current value of the threshold, a new threshold by calculating a difference between the second volume and the current value and adding the difference to the current value.

7. A construction machine, comprising:
a working gear including an arm member tiltably attached to a main body and having one more joints for allowing a posture of the arm member to be changed, and a bucket roratably attached to the arm member;
a distance detector which is attached to the arm member or the main body and provides measurement data indicating a distance to a subject;
a posture detector which provides posture data indicating a posture of the working gear;
a first contour calculation part which calculates, based on first measurement data which is the measurement data of the bucket in an empty state provided by the distance detector, first contour data indicating a contour of the bucket;
a memory which stores first posture data which is the posture data at a first time when the first measurement data is provided and the first contour data in association with each other;
a second contour calculation part which calculates, based on second measurement data which is the measurement data of soil and sand contained in the bucket as provided by the distance detector, second contour data indicating a surface contour of the soil and sand at a second time in execution of an excavation operation by the bucket after the first time;
a differential information calculation part which calculates differential information indicating a difference between the first posture data and the second posture data which is the posture data provided by the posture detector at the second time;
a rotation processing part which rotates, based on the differential information, the second contour data in a three-dimensional coordinate space of the distance detector so that the posture of the working gear from the distance detector to the bucket at the second time agrees with the posture of the working gear from the distance detector to the bucket at the first time; and
a volume calculation part which specifies a region defined by supplemental contour data for supplementing the surface contour of the object contained in the bucket in the execution of the excavation operation, the rotated second contour data, and the first contour data, and calculates, based on the specified region, a first volume indicating the volume of the soil and sand contained in the bucket at the second time.
